# EUROPEAN PATENT APPLICATION

(11) **EP 4 307 415 A1**
(43) Date of publication of application: **17.01.2024**
(21) Application number: 21935605.2
(22) Date of filing: 09.04.2021
(51) Int. Cl.: H01M 10/04, H01M 6/00, H01M 50/184, H01M 50/186, H01M 50/172, H01M 50/141, H01M 50/242

(54) **BATTERY CELL AND ELECTRICAL DEVICE**

(71) Applicant: Ningde Amperex Technology Ltd., Ningde, Fujian 352106 (CN)
(72) Inventor: LI, Lei, Ningde, Fujian 352106 (CN)
(74) Representative: Klunker IP Patentanwälte PartG mbB
(86) International application number: PCT/CN2021/086248
(87) International publication number: WO 2022/213379

(57) **Abstract**

A battery cell is disclosed, including an electrode assembly and a housing accommodating the electrode assembly. The housing includes a cavity and a cover covering the cavity. The cavity includes a flange extending along a border of an opening of the cavity. Periphery of the cover is connected to the flange to form a side wing to seal the cavity. The battery cell further includes a tab sandwiched between the side wings and extending out of the housing along the side wings. The side wing has a first sealing structure and a second sealing structure. A direction from an edge, away from the border, of the side wing to the border is defined as a first direction, and the second sealing structure exceeds the first sealing structure in the first direction. This application further provides an electric apparatus having the foregoing battery cell. This application can reduce the risk of collapse of the housing and improve safety of battery cells.

## Description

### TECHNICAL FIELD

This application relates to the field of energy storage technologies, and in particular, to a battery cell and an electric apparatus having the battery cell.

### BACKGROUND

With the development of battery technologies, batteries are widely used in electric apparatus such as electronic mobile devices, electric tools, and electric vehicles. A battery cell typically includes a housing, an electrode assembly and an electrolyte accommodated in the housing, and tabs electrically connected to the electrode assembly. During packaging of a battery cell, aluminum-plastic films at upper and lower layers need to be heat sealed by using a sealing head, so that the electrode assembly and the electrolyte are sealed inside the housing. Generally, the housing includes a cavity accommodating the electrode assembly and a sealing edge that extends from the cavity. Part of the tabs is inside the cavity and part of them extend out of the housing along the sealing edge.

However, the cavity tends to collapse under the effect of external force at the location of the tabs, which affects battery appearance. In addition, collapse of the cavity may slant the tabs, and the slanted tabs of different polarities are prone to direct contact, causing a risk of fire due to short circuit. Furthermore, when a battery cell drops, the electrode assembly moves in the housing and the edge sealing area may be broken easily, leading to risks such as electrolyte spill and fire due to short circuit as well as failure of the battery cell. As a result, the safety of battery cells is reduced.

### SUMMARY

To resolve the foregoing shortcomings of the prior art, it is necessary to provide a battery cell that can reduce the risk of collapse of the housing and improve the safety.

In addition, it is necessary to further provide an electric apparatus having the foregoing battery cell.

This application provides a battery cell, including an electrode assembly and a housing accommodating the electrode assembly. The housing includes a cavity and a cover covering the cavity. The cavity includes a flange extending along a border of an opening of the cavity. Periphery of the cover is connected to the flange to form a side wing to seal the cavity. The battery cell further includes a tab sandwiched between the side wings and extending out of the housing along the side wings. The side wing has a first sealing structure and a second sealing structure. A direction from an edge, away from the border, of the side wing to the border is defined as a first direction, and the second sealing structure exceeds the first sealing structure in the first direction.

In this application, the second sealing structure is disposed on the side wing, without increasing the overall length of the battery cell. The second sealing structure occupies a space in the cavity previously designed for accommodating the tab, therefore reducing the risk of collapse of the cavity under the effect of external force. In addition, when the battery cell is mechanically abused and the electrode assembly moves towards the side wing, the second sealing structure can apply resistance to the electrode assembly. This helps reduce the possibility of the electrode assembly breaking the seal, reduces the battery cell failure risk, and improves the safety performance of the battery cell. Furthermore, due to disposition of the second sealing structure, the sealing width of this portion is increased, and the sealing strength of this portion is improved accordingly, further helping reduce the possibility of the electrode assembly breaking the seal.

In some possible implementations, the tab is sandwiched between the first sealing structures.

In some possible implementations, the tab is sandwiched between the second sealing structures.

In some possible implementations, the tab includes a first tab and a second tab. The first tab is sandwiched between the first sealing structures, and the second tab is sandwiched between the second sealing structures.

In some possible implementations, the tab includes a first tab and a second tab. A direction perpendicular to the first direction is defined as a second direction, and the first tab and the second tab are arranged side by side in the second direction.

In some possible implementations, the first sealing structure is disposed between two second sealing structures in the second direction. Disposition of two second sealing structures further occupies a space in the cavity previously designed for accommodating the tab. When the electrode assembly moves towards the side wing, the second sealing structures can apply resistance to two positions on an edge of the electrode assembly facing the side wing and the sealing strength within the side wing is further improved, thereby further reducing the possibility of the electrode assembly breaking the seal.

In some possible implementations, the second sealing structure is disposed between two first sealing structures in the second direction.

In some possible implementations, the first tab and the second sealing structure are arranged on two sides of the second tab in the second direction.

In some possible implementations, the first tab and the second sealing structure are arranged on the same side of the second tab in the second direction.

In some possible implementations, the second sealing structure is disposed between the first tab and the second tab. In this way, when the electrode assembly moves towards the side wing, the second sealing structure can apply resistance to the middle position of the electrode assembly.

In some possible implementations, the side wing has a concave structure, and the concave structure is formed by depressing an edge of the side wing away from the border towards the cavity. Due to disposition of the concave structure, the battery cell can adequately fit into the internal space of an electric apparatus.

In some possible implementations, the concave structure is arranged on two ends of the side wing in the second direction.

In some possible implementations, the concave structure is disposed between the first tab and the second tab.

In some possible implementations, two second sealing structures are arranged on two sides of the concave structure in the second direction.

In some possible implementations, the concave structure is disposed on the second sealing structure in the first direction.

In some possible implementations, the housing is made of a multi-layer plate material, and the multi-layer plate material includes a metal layer and a sealing layer. A middle area of a first section of the multi-layer plate material depresses to form the cavity. A second section of the multi-layer plate material and the first section are arranged by folding towards each other to seal the cavity. The electrode assembly is accommodated in the cavity.

In some possible implementations, a sealing layer at the periphery of the cover is bound to a sealing layer of the flange so as to seal the cavity, thereby reducing the risk of electrolyte spill.

In some possible implementations, a transition portion is disposed between the side wing and the cavity, thickness of the transition portion is less than thickness of the cavity in a thickness direction of the battery cell, and at the transition portion, the sealing layer at the periphery of the cover is close to but not bound to the sealing layer of the flange.

According to an implementation of this application, the transition portion is formed by depressing a portion, adjacent to the cavity, of the multi-layer plate material for the housing. The depressing direction of the portion is the same as that of the cavity, and the depressing depth is less than that of the cavity. In this way, the transition portion provides an accommodating space smaller than the cavity, and the accommodating space can be used to accommodate the tabs.

In some possible implementations, the electrode assembly includes a first electrode plate and a second electrode plate that are arranged alternately, and a separator is disposed between the first electrode plate and the second electrode plate that are adjacent. The separator includes a protrusion disposed beyond the first electrode plate, and the protrusion is disposed at the transition portion. In this way, a size of a part by which the separator exceeds the first electrode plate and the second electrode plate is further increased. This further reduces the risk of a short circuit fire caused by direct contact between the first electrode plate and the second electrode plate and improves the internal space utilization of the housing.

In some possible implementations, thickness of the battery cell is T, and T≥4 mm. In the prior art, the housing of an ultra-thin battery cell tends to collapse due to a larger cavity, degrading the safety performance. This application can reduce the occurrence of such problem.

In some possible implementations, in the first direction, width of the first sealing structure is W₁ and width of the second sealing structure is W₂, and 20 mm≤W₂-W₁≤0.8 mm. By means of setting the value of W₂-W₁, a moving distance of the electrode assembly is dramatically reduced inside the housing, the sealing strength of the second sealing structure is greatly improved, and the length of the battery cell is controlled within a range.

In some possible implementations, 4 mm≤W₂-W₁≤0.8 mm.

In some possible implementations, 3 mm≤W₂-W₁≤1.7 mm.

In some possible implementations, (W₂-W₁)/W₂≤17%. By means of setting the value of (Wz-Wi)/Wz, the moving distance of the electrode assembly is dramatically reduced inside the housing, and the sealing strength of the second sealing structure is greatly improved.

This application further provides an electric apparatus, including a load and any type of battery cells described as above. The battery cell is used to supply power to the load.

### BRIEF DESCRIPTION OF DRAWINGS

FIG 1 is a schematic structural diagram of a battery cell according to an implementation of this application.
FIG 2 is an exploded view of a housing of the battery cell illustrated in FIG 1 before packaging.
FIG 3 is a cross-sectional view of a multi-layer plate material used by a housing of the battery cell illustrated in FIG 1.
FIG 4 is a schematic structural diagram of the battery cell illustrated in FIG 1 according to some other embodiments.
FIG 5 is a schematic structural diagram of the battery cell illustrated in FIG 1 according to some other embodiments.
FIG 6 is part of a cross-sectional view of the battery cell illustrated in FIG 1 in a VI-VI direction.
FIG 7 is a schematic structural diagram of the battery cell illustrated in FIG 1 according to some other embodiments.
FIG 8 is a schematic structural diagram of the battery cell illustrated in FIG 1 according to some other embodiments.
FIG 9 is a schematic structural diagram of the battery cell illustrated in FIG 1 according to some other embodiments.
FIG 10 is a schematic structural diagram of a battery cell according to another implementation of this application.
FIG 11 is a schematic structural diagram of a battery cell according to still another implementation of this application.
FIG 12 is a schematic structural diagram of the battery cell illustrated in FIG 11 according to some other embodiments.
FIG 13 is a schematic structural diagram of an electric apparatus according to an implementation of this application.

### Reference signs of main components

| | |
|---|---|
| Electric apparatus | 1 |
| Load | 2 |
| Housing | 10 |
| First side wing | 12 |
| Second side wing | 13 |
| Electrode assembly | 20 |
| Main plane | 20a |
| Side | 20b |
| First electrode plate | 21 |
| Second electrode plate | 22 |
| Separator | 23 |
| First tab | 30 |
| Interior tab | 31 |
| Exterior tab | 32 |
| Adhesive tape | 33 |
| Second tab | 40 |
| Cell | 100, 200, 300 |
| Cover | 101 |
| Cavity | 102 |
| First side surface | 102a |
| Second side surface | 102b |
| Multi-layer plate material | 110 |
| Protective layer | 111 |
| First binding layer | 112 |
| Metal layer | 113 |
| Second binding layer | 114 |
| Sealing layer | 115 |
| Transition portion | 120 |
| First connecting portion | 121 |
| Unconnected portion | 122 |
| Concave structure | 123 |
| Protrusion | 230 |
| Periphery | 1010 |
| Border | 1020 |
| Flange | 1021 |
| First section | 1101 |
| Second section | 1102 |
| First transition region | 1201 |
| Second transition region | 1202 |
| First sealing structure | 1211 |
| Second sealing structure | 1212 |
| Side wall | 1231 |
| Bottom wall | 1232 |
| First direction | D₁ |
| Second direction | D₂ |
| Thickness direction | D₃ |
| Thickness | T₁, T₂ |
| Width | W₁, W₂, W₃, W₄, W₅ |
| Distance | D |

This application will be further described with reference to the accompanying drawings in the following specific embodiments.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application.

Unless otherwise defined, all technical and scientific terms used herein shall have the same meanings as commonly understood by those skilled in the art to which this application belongs. The terms used herein in the specification of this application are merely intended to describe specific embodiments but not intended to limit this application.

The following describes in detail some embodiments of this application with reference to the accompanying drawings. In absence of conflicts, the following embodiments and features in the embodiments may be combined.

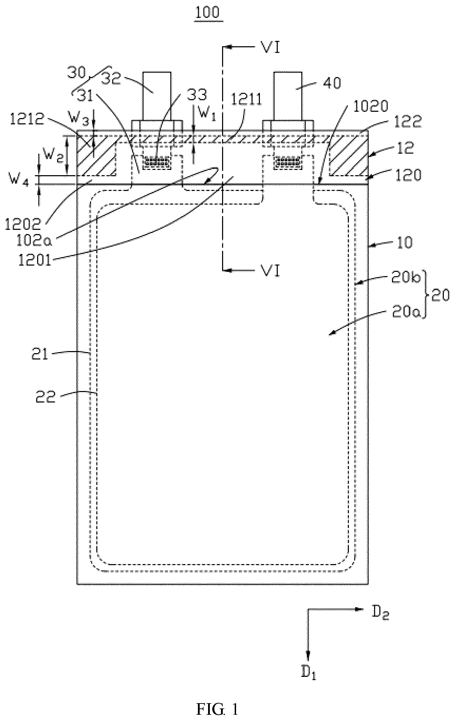

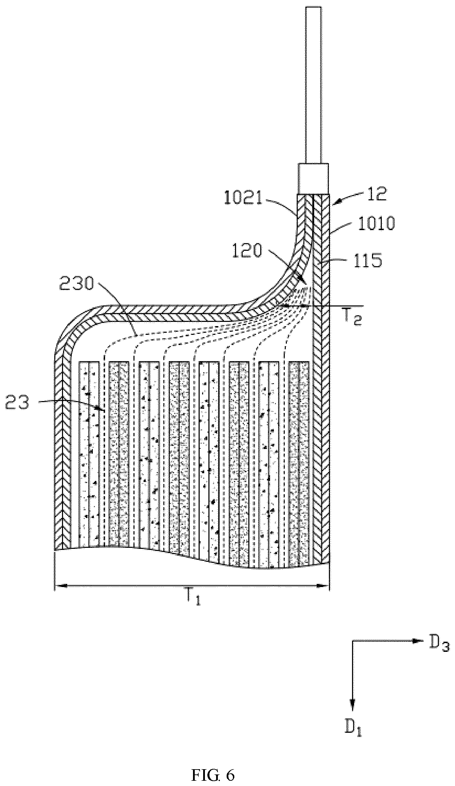

Referring to FIG 1, an implementation of this application provides a battery cell 100, including an electrode assembly 20, an electrolyte (not shown in the figure), and a housing 10 for accommodating the electrode assembly 20 and the electrolyte. The electrode assembly 20 includes a first electrode plate 21 and a second electrode plate 22 that are arranged alternately, a separator 23 (shown in FIG 6) is disposed between the first electrode plate 21 and the second electrode plate 22 that are adjacent. The separator 23 is used to reduce the risk of short circuit caused by direct contact between the first electrode plate 21 and the second electrode plate 22 that are adjacent. The electrode assembly 20 illustrated in FIG 1 is obtained by laminating the first electrode plate 21, the separator 23, and the second electrode plate 22. That is, the battery cell 100 is a battery cell obtained through stacking. In other implementations, the battery cell 100 may alternatively be a wound battery cell, which is not limited in this application.

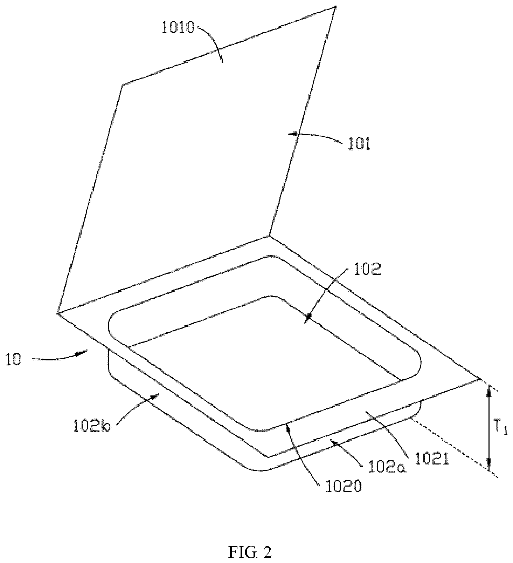

Also referring to FIG 2, the housing 10 includes a cavity 102 and a cover 101 covering the cavity 102. The electrode assembly 20 is accommodated in the cavity 102. A flange 1021 is formed by extending from a border 1020 of an opening of the cavity 102. Periphery 1010 of the cover 101 is connected to the flange 1021 to form a first side wing 12. The first side wing 12 is used to seal the cavity 102. The cavity 102 includes two first side surfaces 102a that are opposite and two second side surfaces 102b that are opposite. The second side surfaces 102b are connected between the two first side surfaces 102a. The first side wing 12 is connected to one first side surface 102a of the cavity 102.

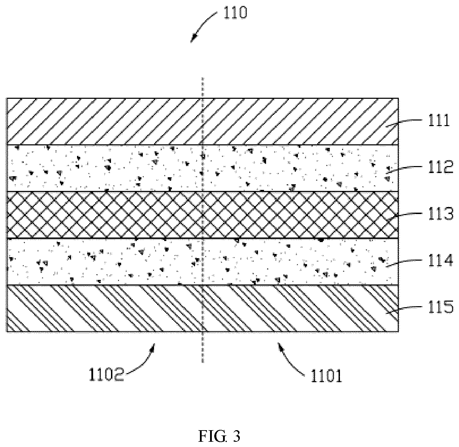

Also referring to FIG 3, in some embodiments, the housing 10 is made of a multi-layer plate material 110. The multi-layer plate material 110 may include a metal layer 113 and a sealing layer 115 stacked in sequence. The sealing layer 115 is close to the electrode assembly 20. The metal layer 113 is used to prevent water from entering and protect the battery cell 100 from being damaged by external force. For example, the metal layer 113 may be specifically an aluminum foil layer. The sealing layer 115 is used for packaging to prevent the multi-layer plate material 110 from being dissolved or swelled by an organic solvent in the electrolyte. The sealing layer 115 is further used to prevent an electrolyte salt in the electrolyte from coming into contact with the metal layer 113 and corroding the metal layer 113. In some embodiments, the multi-layer plate material 110 may further include a protective layer 111, a first binding layer 112, and a second binding layer 114. The protective layer 111, the first binding layer 112, the metal layer 113, the second binding layer 114, and the sealing layer 115 are stacked in sequence. The protective layer 111 is made of polymer resin and used to protect the metal layer 113 from being damaged by external force, and can prevent air from entering and maintain a water- and oxygen-free environment inside the battery cell 100. The first binding layer 112 is used to bind the protective layer 111 and the metal layer 113. The second binding layer 114 is used to bind the metal layer 113 and the sealing layer 115.

The multi-layer plate material 110 includes a first section 1101 and a second section 1102. A middle area of a first section 1101 of the multi-layer plate material 110 depresses to form the cavity 102, and the second section 1102 of the multi-layer plate material 110 and the first section 1101 are arranged by folding towards each other to form the cover 101. The cover 101 is used to seal the cavity 102. During preparation of the housing 10, a heat sealing head can be used to apply specified temperature and pressure on the periphery 1010 of the cover 101 and the flange 1021 of the cavity 102 for heat sealing. In this way, the sealing layer 115 at the periphery 1010 of the cover 101 is bound to the sealing layer 115 of the flange 1021 to form the first side wing 12, so as to seal the cavity 102 and reduce the risk of electrolyte spill.

As shown in FIG 1, the first side wing 12 does not need to be folded after heat sealing. That is, the first side wing 12 is approximately perpendicular to the first side surface 102a. Certainly, this is not limited in this application. In other implementations, the first side wing 12 may also be folded onto the first side surface 102a to reduce the size of the battery cell 100 in its length direction, helping increase the space utilization and energy density of the battery cell 100.

The battery cell 100 further includes a tab electrically connected to the electrode assembly 20. The tab is sandwiched between the first side wings 12, and extends out of the housing 10 along the first side wing 12 for connection with an external component (not shown in the figure). As shown in FIG 1, in some embodiments, the tab includes a first tab 30 and a second tab 40. The first tab 30 is electrically connected to the first electrode plate 21, and the second tab 40 is electrically connected to the second electrode plate 22. Both the first tab 30 and the second tab 40 extend out of the housing 10 along the first side wing 12.

As shown in FIG 1, the first side wing 12 includes a first sealing structure 1211 and a second sealing structure 1212 connected to the first sealing structure 1211. Both the first sealing structure 1211 and the second sealing structure 1212 are formed by binding the sealing layer 115 at the periphery 1010 of the cover 101 to the sealing layer 115 of the flange 1021. A direction from an edge, away from the border 1020, of the first side wing 12 to the border 1020 is defined as a first direction D₁. In a case that the first side wing 12 is not folded, the first direction D₁ is the length direction of the battery cell 100. The second sealing structure 1212 exceeds the first sealing structure 1211 in the first direction D₁. That is, in the first direction D₁, width of the first sealing structure 1211 is W₁ and width of the second sealing structure 1212 is W₂, and W₂>W₁. This application requires an improvement only on the structure of the heat sealing head, and does not cause extra burden on the entire process.

In some embodiments, thickness of the battery cell 100 (namely, thickness of the cavity 102) is T₁, and T₁≥4 mm. That is, the battery cell 100 is an ultra-thin battery cell. Optionally, T≥2 mm. The electrode assembly 20 includes two main planes 20a disposed opposite each other and a side 20b disposed between the two main planes 20a. When the battery cell 100 is a battery cell obtained through stacking, the side 20b is approximately a plane; when the battery cell 100 is a wound battery cell, the side 20b is a curved face. A plane where the tab is located is parallel to the main plane 20a. In other words, the tab is disposed flat and does not bend inside the housing 10, so as to avoid an increase in thickness of the battery cell 100 caused by a bent tab.

In the prior art, if a tab needs to be disposed flat for a thin battery cell, a cavity in the housing for accommodating the electrode assembly needs to be enlarged to hold the tab. However, the tab disposed flat is generally thinner than the electrode assembly, and therefore the cavity tends to collapse under the effect of external force near a location of the tab in the cavity in the case of a thin tab. That easily causes collapse of the cavity in appearance, as well as a slanted tab. Because free space in the housing is larger for the electrode assembly and electrolyte, when the battery cell drops, the moving electrode assembly and electrolyte cause greater impact on sealed edges. As a result, the sealed edges will be broken more easily.

In this application, the second sealing structure 1212 is disposed on the first side wing 12, without increasing the overall size of the battery cell 100. In this case, the second sealing structure 1212 occupies the space in the cavity previously designed for accommodating the tab, thereby reducing the risk of collapse of the cavity under the effect of external force. In addition, when the battery cell 100 is mechanically abused (such as drop, collision, and squeezing) and the electrode assembly 20 moves towards the first side wing 12, the second sealing structure 1212 can apply resistance to the electrode assembly 20. This reduces the possibility of the electrode assembly 20 breaking a seal, reduces the risk of failure of the battery cell 100, and improves the safety performance of the battery cell 100. Furthermore, due to disposition of the second sealing structure 1212, the sealing width of this portion is increased, and the sealing strength of this portion is improved accordingly, further helping reduce the possibility of the electrode assembly 20 breaking the seal.

Therefore, when the battery cell 100 of this application is an ultra-thin battery cell, this application can reduce the occurrence of a problem that the safety performance is degraded because the housing of an ultra-thin battery cell in the prior art tends to collapse due to a larger cavity. Certainly, the technical solution of this application may be further used in a thicker battery cell 100, which is not limited in this application.

In some embodiments, W₁ and W₂ satisfy that 20 mm≤W₂-W₁≤0.8 mm. W₂-W₁ represents width of a portion by which the second sealing structure 1212 exceeds the first sealing structure 1211. By means of setting the value of W₂-W₁, a moving distance of the electrode assembly 20 is dramatically reduced inside the housing 10, the sealing strength of the second sealing structure 1212 is greatly improved, and the length of the battery cell 100 is controlled within a range.

Optionally, 3 mm≤W₂-W₁≤1.7 mm.

In some other embodiments, W₁ and W₂ satisfy that (W₂-W₁)/W₂≤17%. According to another embodiment of this application, (W₂-W₁)/W₂≥50%.

For example, W₂ is 4.59 mm and W₁ is 1.3 mm. That is, W₂-W₁=3.29 mm, and (W₂-W₁)/W₂=72%.

For example, W₂ is 4.0 mm and W₁ is 2.0 mm. That is, W₂-W₁=2.00 mm, and (W₂-W₁)/W₂=50%.

By means of setting the value of (W₂-W₁)/W₂, the moving distance of the electrode assembly 20 is dramatically reduced inside the housing 10, and the sealing strength of the second sealing structure 1212 is greatly improved.

As shown in FIG 1, a direction perpendicular to the first direction D₁ is defined as a second direction D₂. In some cases, the second direction D₂ is a width direction of the battery cell 100. The first tab 30 and the second tab 40 are arranged side by side in the second direction D₂. Furthermore, both the first tab 30 and the second tab 40 include an interior tab 31 and an exterior tab 32. The interior tab 31 is electrically connected to the electrode assembly 20. To be specific, the interior tab 31 of the first tab 30 is electrically connected to a current collector of the first electrode plate 21, and the interior tab 31 of the second tab 40 is electrically connected to a current collector of the second electrode plate 22. The exterior tab 32 is welded to the interior tab 31 and extends out of the housing 10 by way of the first sealing structure 1211 and/or the second sealing structure 1212. An adhesive tape 33 is disposed at a welding joint of the interior tab 31 and the exterior tab 32. The adhesive tape 33 is used to prevent a weld mark at the welding joint from piercing the housing 10, thereby avoiding risks such as short circuit or electrolyte spill. Thickness of the adhesive tape 33 may be 50-100 µm.

As shown in FIG 1, in some embodiments, the tab is sandwiched between the first sealing structures 1211. For example, both the first tab 30 and the second tab 40 are sandwiched between the first sealing structures 1211. It should be understood that, in this application, the tab being sandwiched between the first sealing structures 1211 means that the tab is sandwiched between the sealing layer 115 at the periphery 1010 of the cover 101 and the sealing layer 115 of the flange 1021.

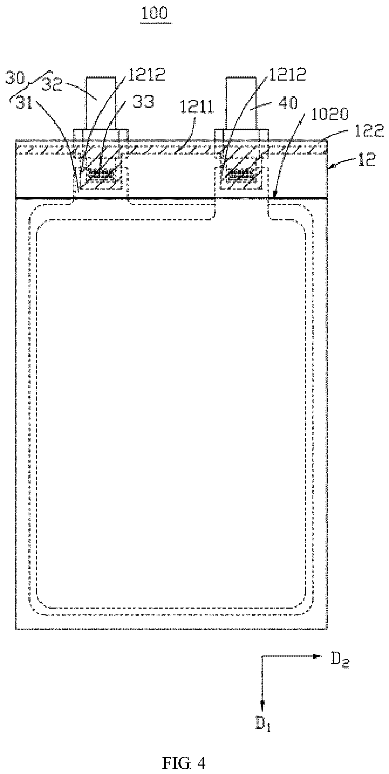

Referring to FIG 4, in some other embodiments, the tab may also be sandwiched between the second sealing structures 1212. For example, both the first tab 30 and the second tab 40 are sandwiched between the second sealing structures 1212.

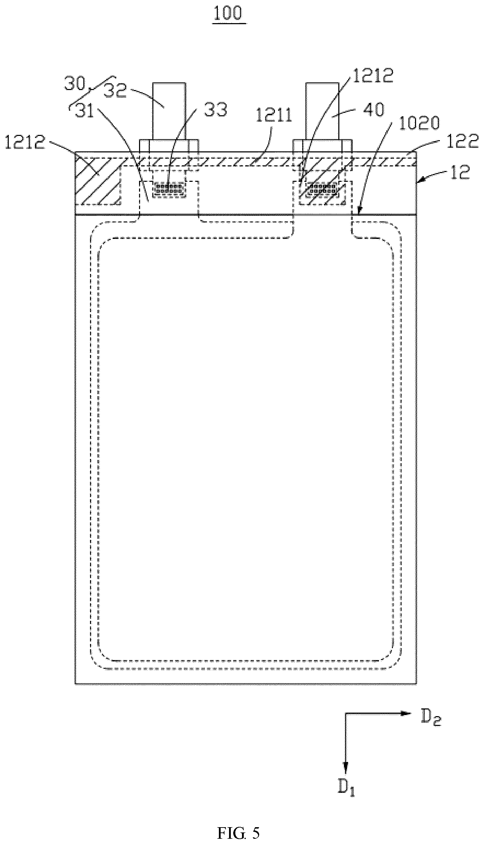

Referring to FIG 5, in another embodiment, the first tab 30 is sandwiched between the first sealing structures 1211, and the second tab 40 is sandwiched between the second sealing structures 1212.

As shown in FIG 1, in some embodiments, two second sealing structures 1212 are provided. The first sealing structure 1211 is disposed between two second sealing structures 1212 in the second direction D₂. Disposition of two second sealing structures 1212 further occupies a space in the cavity previously designed for accommodating the tab. When the electrode assembly 20 moves towards the first side wing 12, the second sealing structures 1212 can apply resistance to two positions on an edge of the electrode assembly 20 facing the first side wing 12. Moreover, disposition of the second sealing structures 1212 further improves the sealing strength, thereby further reducing the possibility of the electrode assembly 20 breaking the seal. The two second sealing structures 1212 are the same in width W₂ in the first direction D₁.

In some other embodiments, the two second sealing structures 1212 are different in width W₂ in the first direction D₁.

As shown in FIG 1, in some embodiments, the first tab 30 and one of the second sealing structures 1212 are arranged on the same side of the second tab 40 in the second direction D₂. The first tab 30 and the other one of the second sealing structures 1212 are arranged on two sides of the second tab 40.

Referring to FIG 1 and FIG 6, in some embodiments, a transition portion 120 is disposed between the first side wing 12 and the cavity 102. In a thickness direction D₃ of the battery cell 100, thickness T₂ of the transition portion 120 is less than thickness T₁ of the cavity 102. At the transition portion 120, the sealing layer 115 at the periphery 1010 of the cover 101 is close to but not bound to the sealing layer 115 of the flange 1021. As shown in FIG 1, in some embodiments, the first side wing 12 is further provided with an unconnected portion 122, and both the first sealing structure 1211 and the second sealing structure 1212 are disposed between the unconnected portion 122 and the transition portion 120. At the unconnected portion 122, the sealing layer 115 at the periphery 1010 of the cover 101 adjoins but is not bound to the sealing layer 115 of the flange 1021. Width of the unconnected portion 122 in the first direction D₁ is defined as W₃, and W₃≤0.4 mm.

In some embodiments, the transition portion 120 is formed by depressing a portion, adjacent to the cavity 102, of the multi-layer plate material 110 for the housing 10. The depressing direction of this portion is the same as that of the cavity 102, and the depressing depth is less than that of the cavity 102. In this way, the transition portion 120 provides an accommodating space smaller than the cavity 102, and the accommodating space can be used to accommodate the tabs.

In some embodiments, the transition portion 120 includes a first transition region 1201 and a second transition region 1202 that communicates with the first transition region 1201. The first transition region 1201 is connected between the first sealing structure 1211 and the cavity 102, and the second transition region 1202 is located between the second sealing structure 1212 and the cavity 102. The first transition region 1201 is used to accommodate the welding joint of the interior tab 31 and the exterior tab 32 as well as the adhesive tape 33 disposed at the welding j oint. Also referring to FIG 6, according to another embodiment of this application, the separator 23 includes a protrusion 230 disposed beyond the first electrode plate 21. The protrusion 230 is disposed on the transition portion 120 to fill up at least part of space in the transition portion 120. In this way, a size of a part by which the separator 23 exceeds the first electrode plate 21 and the second electrode plate 22 is further increased. This further reduces the risk of a short circuit fire caused by direct contact between the first electrode plate 21 and the second electrode plate 22 and improves the internal space utilization of the housing 10. Specifically, the protrusion 230 of the separator 23 may be disposed in the first transition region 1201.

As shown in FIG 1, a distance between an end portion, facing the border 1020, of the second sealing structure 1212 and the border 1020 is width of the second transition region 1202 in the first direction D₁. Width of the second transition region 1202 is defined as W₄, and W₄≤0.2 mm. Optionally, W₄ is approximately 1 mm. The second transition region 1202 has a specific width, which helps reduce the risk of an adhesive tape on the head portion of the electrode assembly 20 entering a seal and ensures the sealing reliability.

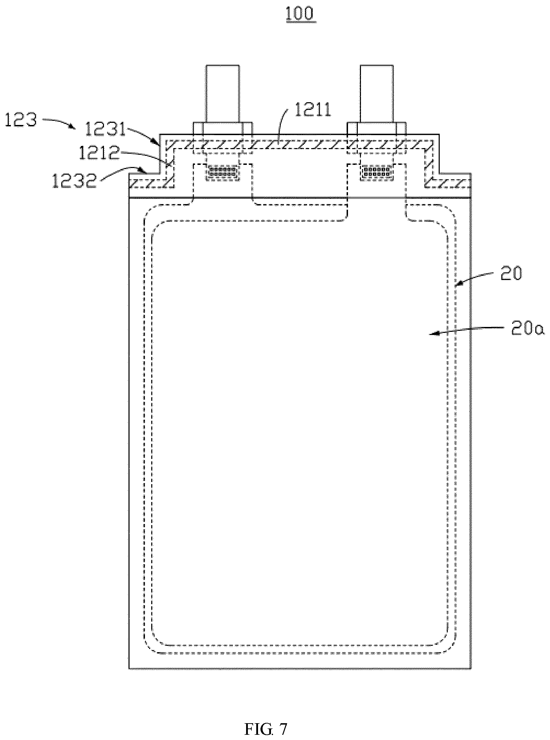

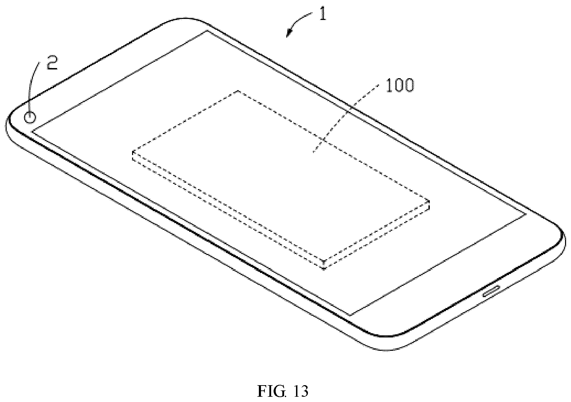

Referring to FIG 7, in some other embodiments, the first side wing 12 has a concave structure 123, and the concave structure 123 is formed by depressing an edge of the first side wing 12 away from the border towards the cavity 102. When the battery cell 100 is applied to an electric apparatus 1 (shown in FIG 13), disposition of the concave structure 123 allows the battery cell 100 to adequately fit into the internal space of the electric apparatus 1. For example, electronic components inside the electric apparatus 1 can be accommodated in the concave structure 123. A cross section of the concave structure 123 may be in the shape of a rectangle or an arc in the direction of the main plane 20a of the electrode assembly 20, which is not limited in this application.

Two concave structures 123 are provided. The concave structure 123 is arranged on two ends of the first side wing 12 in the second direction D₂. The second sealing structure 1212 is disposed around the concave structure 123. As shown in FIG 7, the cross section of the concave structure 123 is in the shape of a rectangle in the direction of the main plane 20a of the electrode assembly 20. The concave structure 123 includes a side wall 1231 and a bottom wall 1232 connected to the side wall 1231. The second sealing structures 1212 are disposed on the side wall 1231 and the bottom wall 1232 respectively.

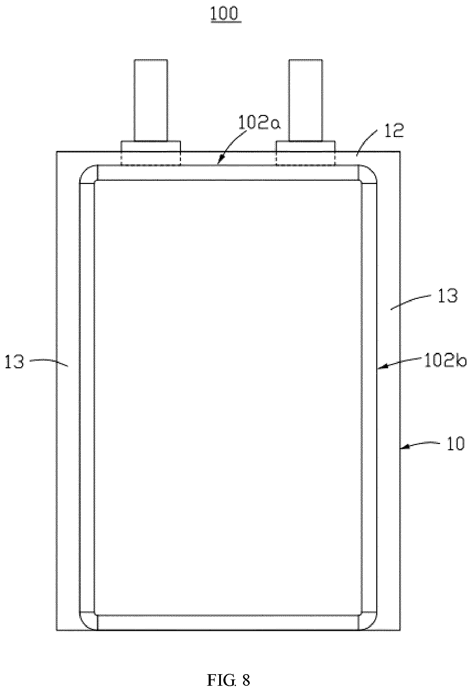

Also referring to FIG 8, in some other embodiments, the housing 10 further includes a second side wing 13. The second side wing 13 is attached to the two second side surfaces 102b of the cavity 102 and used to seal the cavity 102. The second side wing 13 has a third sealing structure (not shown in the figure). The third sealing structure is also formed by binding the sealing layer 115 at the periphery 1010 of the cover 101 to the sealing layer 115 of the flange 1021. The second sealing structure 1212 is connected to the third sealing structure.

The second side wing 13 is not folded after heat sealing. That is, the second side wing 13 is approximately perpendicular to the second side surface 102b. Certainly, this is not limited in this application. In other implementations, the second side wing 13 may also be folded onto the second side surface 102b to reduce the size of the battery cell 100 in its width direction, helping increase the space utilization and energy density of the battery cell 100.

During preparation of the housing 10, the second section 1102 of the multi-layer plate material 110 is folded with regard to the first section 1101 to form the cover 101. The second section 1102 and the first section 1101 are folded on the other first side surface 102a opposite the first side wing 12. That is, the second section 1102 and the first section 1101 are folded at the tail of the electrode assembly 20.

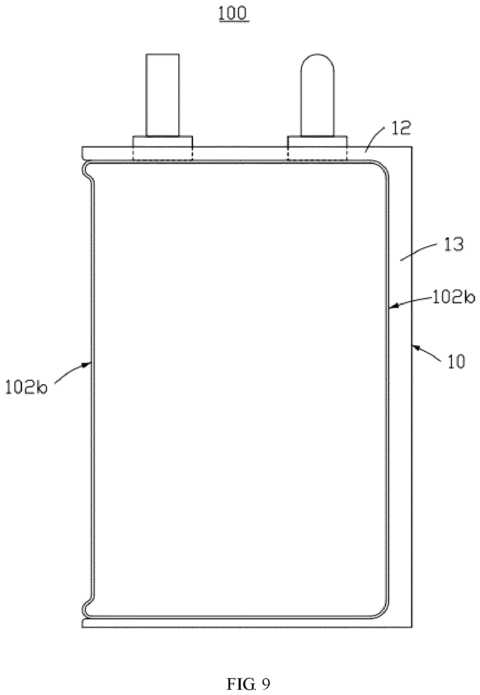

Also referring to FIG 9, in some other embodiments, the second side wing 13 is only connected to one second side surface 102b of the cavity 102. During preparation of the housing 10, the second section 1102 and the first section 1101 are folded on the other second side surface 102b opposite the second side wing 13.

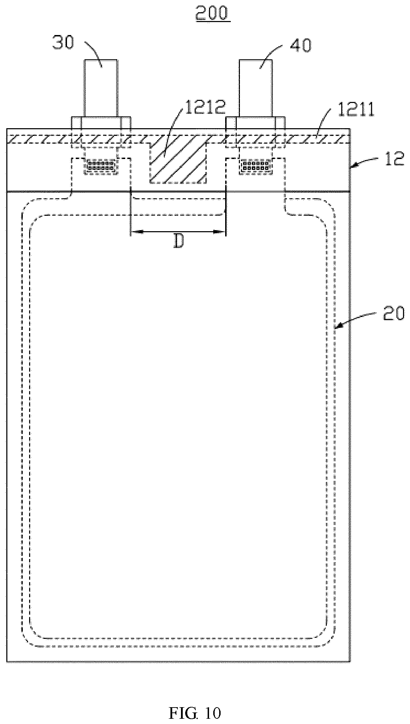

Referring to FIG 10, another implementation of this application further provides a battery cell 200, which is different from the battery cell 100 in that only one second sealing structure 1212 is provided but two first sealing structures 1211 are provided. The second sealing structure 1212 is disposed between two first sealing structures 1211. In this way, when the electrode assembly 20 moves towards the first side wing 12, the second sealing structure 1212 can apply resistance to a middle position on an edge of the electrode assembly 20 facing the first side wing 12.

In some embodiments, the second sealing structure 1212 is disposed between the first tab 30 and the second tab 40. When the second sealing structure 1212 is disposed between the first tab 30 and the second tab 40, a distance D between the first tab 30 and the second tab 40 needs to satisfy that D>9.64 mm. Therefore, the second sealing structure 1212 between the first tab 30 and the second tab 40 is exposed in a specific size in the second direction D₂. In this way, the second sealing structure 1212 can effectively reduce the risk of collapse of the cavity 102 under the effect of external force, and he second sealing structure 1212 can apply great resistance to the electrode assembly 20 when the battery cell 100 is mechanically abused.

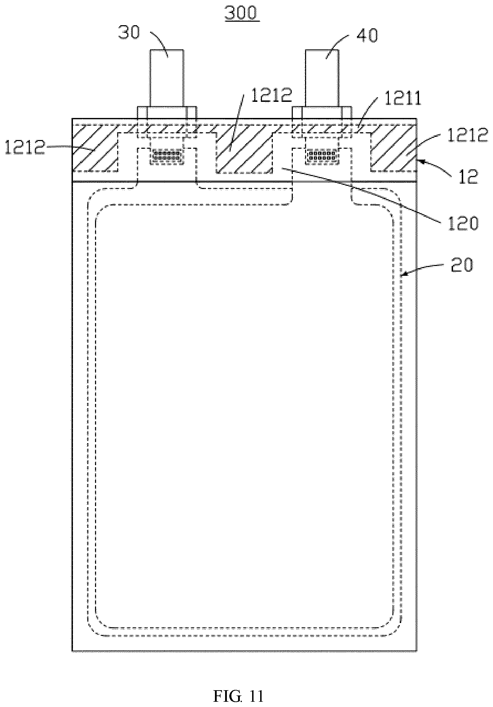

Referring to FIG 11, another implementation of this application further provides a battery cell 300, which is different from the battery cell 100 in that three second sealing structures 1212 are provided. The first tab 30 and one of the second sealing structures 1212 are arranged on two sides of the second tab 40 in the second direction D₂. The first tab 30 and the other two of the second sealing structures 1212 are arranged on the same side of the second tab 40.

In this way, the three second sealing structures 1212 occupy the space in the cavity previously designed for accommodating the tab, thereby significantly reducing the risk of collapse of the cavity 102 under the effect of external force. When the electrode assembly 20 moves towards the first side wing 12, the second sealing structures 1212 can apply resistance to three positions on an edge of the electrode assembly 20, improving the sealing strength and further reducing the possibility of the electrode assembly 20 breaking the seal.

In other embodiments, quantities of first sealing structures 1211 and second sealing structures 1212 can be changed based on actual needs, and a plurality of first sealing structures 1211 and a plurality of second sealing structures 1212 are disposed alternately.

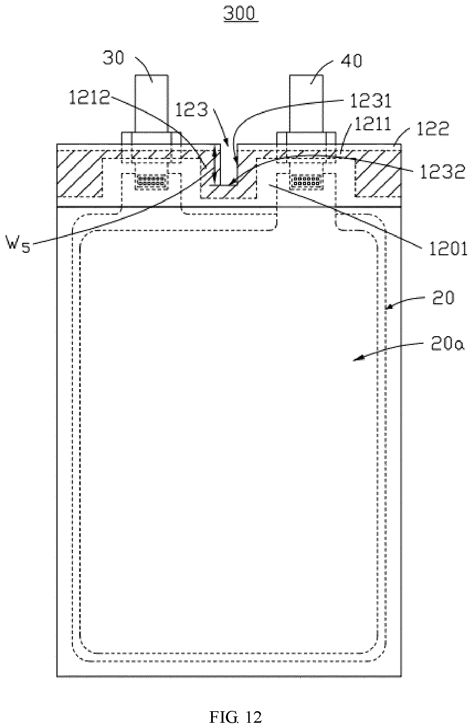

Also referring to FIG 12, in some other embodiments, the concave structure 123 may also be disposed between the first tab 30 and the second tab 40. Two second sealing structures 1212 are arranged on two sides of the concave structure 123 in the second direction D₂.

The concave structure 123 is disposed between the unconnected portion 122 and the second sealing structure 1212 in the first direction D₁. In other words, the second sealing structure 1212 is disposed around the concave structure 123. As shown in FIG 11, the cross section of the concave structure 123 is in the shape of a rectangle in the direction of the main plane 20a of the electrode assembly 20. The concave structure 123 includes two side walls 1231 and the bottom wall 1232 connected between the two side walls 1231. The second sealing structures 1212 are disposed on each of the side walls 1231 and the bottom wall 1232 respectively. Width of the concave structure 123 in the first direction D₁ is defined as W₅, and W₅≥3.04 mm.

The battery cells 100, 200, and 300 in this application may be all kinds of primary batteries, secondary batteries, fuel batteries, solar batteries, or capacitors (for example, super capacitors). In particular, the secondary batteries may be lithium secondary batteries, including lithium metal secondary batteries, lithium-ion secondary batteries, lithium polymer secondary batteries, and lithium-ion polymer secondary batteries.

Referring to FIG 13, an embodiment of this application further provides an electric apparatus 1, and the electric apparatus 1 includes a load 2 and the foregoing battery cell 100 (or the battery cell 200 or 300). The battery cell 100 is used to supply power to the load 2. In an embodiment, the electric apparatus 1 of this application may be, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like. The load 2 is an electronic component of the electric apparatus 1 electrically connected to the battery cell 100, and is used to convert electric energy into energy of other forms.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. A battery cell, comprising an electrode assembly and a housing accommodating the electrode assembly, wherein the housing comprises a cavity and a cover covering the cavity, the cavity comprises a flange extending along a border of an opening of the cavity, and periphery of the cover is connected to the flange to form a side wing to seal the cavity, wherein
the battery cell further comprises tabs sandwiched between the side wings and extending out of the housing along the side wings; and
the side wing has a first sealing structure and a second sealing structure, wherein a direction from an edge, away from the border, of the side wing to the border is defined as a first direction, and the second sealing structure exceeds the first sealing structure in the first direction.

2. The battery cell according to claim 1, wherein the tabs is sandwiched between the first sealing structures.

3. The battery cell according to claim 1, wherein the tabs are sandwiched between the second sealing structures.

4. The battery cell according to claim 1, wherein the tabs comprise a first tab and a second tab, the first tab is sandwiched between the first sealing structure, and the second tab is sandwiched between the second sealing structure.

5. The battery cell according to claim 1, wherein the tabs comprise a first tab and a second tab, a direction perpendicular to the first direction is defined as a second direction, and the first tab and the second tab are arranged side by side in the second direction.

6. The battery cell according to claim 5, wherein the first sealing structure is disposed between two second sealing structures in the second direction.

7. The battery cell according to claim 5, wherein the second sealing structure is disposed between two first sealing structures in the second direction.

8. The battery cell according to claim 5, wherein the first tab and the second sealing structure are arranged on two sides of the second tab in the second direction.

9. The battery cell according to claim 5, wherein the first tab and the second sealing structure are arranged on the same side of the second tab in the second direction.

10. The battery cell according to claim 5, wherein the second sealing structure is disposed between the first tab and the second tab.

11. The battery cell according to any one of claims 5 to 10, wherein the side wing has a concave structure, and the concave structure is formed by depressing an edge of the side wing away from the border towards the cavity.

12. The battery cell according to claim 11, wherein the concave structure is arranged on two ends of the side wing in the second direction.

13. The battery cell according to claim 11, wherein the concave structure is disposed between the first tab and the second tab.

14. The battery cell according to claim 11, wherein two second sealing structures are arranged on two sides of the concave structure in the second direction.

15. The battery cell according to claim 11, wherein the concave structure is disposed on the second sealing structure in the first direction.

16. The battery cell according to claim 1, wherein the housing is made of a multi-layer plate material, the multi-layer plate material comprises a metal layer and a sealing layer, a middle area of a first section of the multi-layer plate material depresses to form the cavity, and a second section of the multi-layer plate material and the first section are arranged by folding towards each other to seal the cavity, wherein the electrode assembly is accommodated in the cavity.

17. The battery cell according to claim 16, wherein a sealing layer at the periphery of the cover is bound to a sealing layer of the flange so as to seal the cavity.

18. The battery cell according to claim 17, wherein a transition portion is disposed between the side wing and the cavity, a thickness of the transition portion is less than a thickness of the cavity in a thickness direction of the battery cell, and at the transition portion, the sealing layer at the periphery of the cover is close to but not bound to the sealing layer of the flange.

19. The battery cell according to claim 18, wherein the electrode assembly comprises a first electrode plate and a second electrode plate that are arranged alternately, a separator is disposed between the first electrode plate and the second electrode plate adjacent to he first electrode plate, the separator comprises a protrusion disposed beyond the first electrode plate, and the protrusion is disposed at the transition portion.

20. The battery cell according to claim 1, wherein a thickness of the battery cell is T and T≥4 mm.

21. The battery cell according to claim 1, wherein in the first direction, a width of the first sealing structure is W₁ and a width of the second sealing structure is W₂, and 20 mm≤W₂-W₁≤0.8 mm.

22. The battery cell according to claim 21, wherein 3 mm≤W₂-W₁≤1.7 mm.

23. The battery cell according to claim 21, wherein (W₂-W₁)/W₂≤17%.

24. An electric apparatus, comprising a load and the battery cell according to any one of claims 1 to 23, wherein the battery cell is used to supply power to the load.
